(19) Europäisches Patentamt
European Patent Office
Office européen des brevets

(11) Publication number: 0 007 054 A1

# (12) EUROPEAN PATENT APPLICATION

(21) Application number: 79102230.4

(22) Date of filing: 02.07.79

(51) Int. Cl.³: A 23 J 3/00 //A21D13/08, A23G3/00

(30) Priority: 10.07.78 US 922898
21.07.78 US 926682

(43) Date of publication of application: 23.01.80 Bulletin 80/2

(84) Designated Contracting States: DE FR NL

(71) Applicant: STAUFFER CHEMICAL COMPANY

Westport Connecticut 06880(US)

(72) Inventor: Chang, Pei Kung
232 Coachlight Square
Montrose, New York 10548(US)

(72) Inventor: Easley, James Walter
200 Beacon Hill Drive, Apt. 7J
Dobbs Ferry, New York 10522(US)

(74) Representative: Jaeger, Klaus, Dr. rer. nat. et al,
JAEGER, GRAMS & PONTANI Patentanwälte
Bergstrasse 48 1/2
D-8035 München-Gauting(DE)

## (54) New whipping composition of modified whey protein and additives.

(57) An improved whippable whey protein containing composition is provided comprising a whey protein containing product having at least 20% soluble whey protein, and an enzyme modified wheat protein in combination with a member selected from the group consisting of gelatin, gelatin and a water soluble polyphosphate, a gum and mixtures thereof, the whey protein containing product being prepared by one of the following processes:

a) ultrafiltration of cottage cheese whey;

b) adjusting the pH of a solution containing whey protein to a value of from about 11 to about 13, thereafter reducing the pH to a value of from about 4 to about 6 to yield a water solution of a water soluble whey product and insoluble whey solids and separating the water soluble whey final product;

c) hydrolyzing the insoluble whey solids of step b) at a pH of between about 11 and about 13; or

d) combining liquid whey with an effective amount of sodium lauryl sulfate to form a whey protein-sodium lauryl sulfate complex which precipitates from solution, followed by reducing the sodium lauryl sulfate content of the complex to less than 0.1% by weight based on the dry weight of the complex.

The products prepared using the whey protein containing products of steps a) and b) can be used as egg albumen replacers in whipped products such a meringues, nougat candy and divinity candy. The products using the whey proteins of steps a), c) and d) can be used as egg albumen replacers in preparing soft meringues and cakes such as yellow or sponge cake.

EP 0 007 054 A1

# NEW WHIPPING COMPOSITION OF MODIFIED WHEY PROTEIN AND ADDITIVES

## BACKGROUND OF THE PRESENT INVENTION

1. Field of the Invention

The present invention relates to improved whippable egg albumen replacement compositions containing cheese whey protein.

2. Description of the Prior Art

Egg albumen is a known aerating agent in numerous food products.

Due to the expense of egg albumen, many attempts have been made to duplicate the aerating qualities of egg albumen with less expensive materials.

In recently issued U.S. Patent No. 4,089,987 (May 16, 1978), entitled WHIPPING COMPOSITION OF MODIFIED WHEY PROTEIN AND ADDITIVES (P. K. Chang), there is disclosed various compositions which can be used to replace egg albumen in hard meringue including an isolated whey protein and:

1) gelatin
2) gelatin and a water soluble polyphosphate
3) a gum, and
4) mixtures thereof.

While these products can provide effective replacement of egg albumen in most situations, it has been found that these replacers are somewhat deficient in aerating

ability when compared to egg albumen. While these prior art materials are able to foam, hold sugar and heat set, improvements in the functionality, stability and heat set characteristics of the foam are required.

BRIEF DESCRIPTION OF THE INVENTION

In accordance with the present invention, an improved whippable whey protein containing composition is provided comprising at least 70% by weight on a dry solids basis of a whey protein containing product having a least 20% soluble whey protein, the percentage being by weight based on the total weight of dry solids in said whey protein containing product and an enzyme hydrolyzed wheat protein in combination with a member selected from the group consisting of gelatin, gelatin and a water soluble polyphosphate, a gum and mixtures thereof, said whey protein containing product being prepared by any one of the following alternative methods:

a) ultrafiltration of cottage cheese whey; or

b) adjusting the pH of a solution containing a whey protein to a value of from about 11 to about 13, thereafter reducing the pH to a value of from about 4 to about 6 to yield a water solution of a water soluble whey product and insoluble whey solids and separating the water soluble whey final product; or

c) hydrolyzing the insoluble whey solids of step b) at a pH of between about 11 and about 13, or

d) combining liquid whey with an effective amount of sodium lauryl sulfate to form a whey protein-sodium lauryl sulfate complex which precipitates from solution, followed by reducing the sodium lauryl sulfate content of the complex to less than 0.1% by weight based on the dry weight of the complex.

The products prepared using the whey protein containing products of steps a) and b) can be used as egg albumen replacers in whipped products such as

meringue, nougat candy and divinity candy. The whey proteins of steps a), c) and d) can be used as albumen replacers in preparing soft meringue and cakes such as yellow or sponge cake.

The compositions of the present invention provide improved whipping characteristics over existing whippable whey protein containing products as well as the benefit of the excellent food value and lower cost of the whey proteins.

DETAILED DESCRIPTION OF THE PRESENT INVENTION

The gelatin used in the present invention can be either of the alkaline or preferably the acid prepared type. Gelatins ranging in Bloom strength from about 100 to about 300 and preferably from about 200 to about 250 Bloom can be used. The gelatin can be predissolved in water to facilitate incorporation. Preferably "cold-water dispersible" gelatin is used.

The sequestering type water soluble polyphosphates usable in the present invention are medium chain length polyphosphates of the formula:

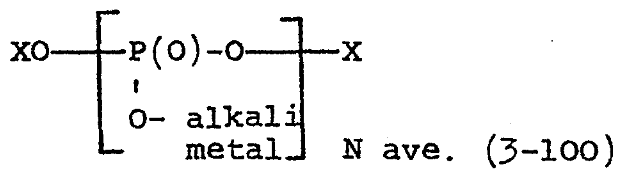

wherein X is hydrogen or alkali metal. Preferably the average chain length (N ave.) is from 3 to 20. Representative compositions within this group are sodium or potassium tripolyphosphate, sodium or potassium tetrapolyphosphate, sodium or potassium hexametaphosphate, the preferred being sodium hexametaphosphate (SHMP) with an average chain length 6-18.

The gums which can be used in the present invention include any of the edible gums or protective colloids such as carrageenan, alginates, such as sodium or potassium alginate, carboxymethylcellulose, accacia, guar, xanthan, and mixtures thereof. The preferred gum is carrageenan which is used in amounts ranging from 0.5% up to and including about 5% and preferably up to and including about 3%.

The enzyme hydrolyzed wheat protein can be prepared by hydrolyzing any wheat protein or wheat protein mixture such as gluten by any proteolytic enzyme effective for that purpose provided the final product has a bland flavor which will not affect the over all flavor of the egg albumen replacer. Proteolytic enzymes are well known to those skilled in the art and effective proteolytic enzymes can be easily determined by such person. While the enzymatically hydrolyzed wheat protein can be used alone, it is preferably used with a small quantity (up to and including about 10% of a sugar to assist in wetting and more preferably with an additional quantity of starch (up to and including about 20%) to thicken and stabilize the mixture, the percentage being by weight based on the total weight of the enzyme hydrolyzed wheat protein. As illustrative of these materials is HYFOAMA 68, available from Naarden Lenderrink and Co., Belgium. This material has 60% protein, 5% water, 6% ash and 20% carbohydrate. The enzymatically hydrolyzed wheat protein is used in amounts of from about 5 to about 30% and preferably from about 10% to about 20% by weight based on the total weight of the whippable whey protein containing composition.

The whey protein usable in the present invention includes any whippable whey protein which can be derived from acid or sweet whey, i.e., cheddar, cottage,

cream, Swiss, and mozarella wheys as well as modified forms thereof including delactosed whey, whey protein concentrate, demineralized whey and the like. In general, to be whippable, the whey protein product must be high in protein content, have a large amount of undenatured protein and a limited amount of fat. Whey protein compositions which are whippable can be prepared by many processes.

The whey protein containing product can be derived from the ultrafiltration of acid or cottage cheese whey. An illustrative method for ultrafiltration is described by Horton, B.S. et al., Food Technology, Vol. 26, p. 30, 1972. This product comprises 40-80% protein (N X 6.38), 10-30% lactose, 3-15% ash, and 0.5-4% fat. This product is available commercially under the name ENRPRO® from Stauffer Chemical Company, Food Ingredients Division, Westport, Connecticut.

The whey protein containing product can also be prepared by treating a normally acidic solution of whey proteins at native pH or acidified at ambient temperature (15°C. - 25°C.) with an effective amount of a food grade base such as sodium hydroxide or an ion exchange resin in the hydroxyl form to given a solution with a pH of from about 11 to about 13, preferably from about 11 to about 12, and most preferably from about 11.5 to 11.9 for no longer than about 60 to about 180 minutes. The total solids content of the solution is from about 5% to about 25% by weight.

Subsequent to treatment with a base, the solution is acidified at ambient temperature (15°C. - 25°C.) to a pH within the range of from about 4.0 to about 6.0, preferably about 4.2 to about 5.0 and most preferably about 4.6, using a food grade acid preferably

hydrochloric acid. The supernatant solution containing the desired modified whey protein product can be easily separated from the precipitate so formed by settling and decantation, by centrifugation, or by any other conventional means known to the art, centrifugation being preferred.

The supernatant liquor which has a protein content of from about 20% to about 35% by weight can be used as is if refrigerated, or, preferably, dried to obtain a low molecular weight whey protein product. It can be used as an egg albumen replacer in hard meringue, nougat candy and divinity candy.

The low molecular product prepared by the alkaline/acid treatment is preferably not used in flour containing baked goods since this product has limited flour tolerance.

The insoluble product resulting from the above process can be converted into a product having utility as an egg albumen substitute in soft meringues and sponge cake, if it is subsequently hydrolyzed at an alkaline pH of about 11 to about 13 for an extended length of time, e.g., about 3 to about 24 hours, at a temperature of from 20°C. to 40°C. The solution resulting therefrom is whippable but does not have the sugar tolerance characteristics required for certain products, e.g., a hard meringue.

Whey protein containing products can also be made by a number of processes including: electrodialysis (e.g., as described by Stribley, R.C., Food Processing, Vol. 24, No. 1, p. 49, 1963); reverse osmosis; alcohol precipitation (e.g., Morr et al., J. Dairy Science, Vol. 53, p. 1162, 1970); or gel filtration (Reissue Patent No. 27,806). When the ultrafiltration or gel filtration procedures are followed, the starting material can be the partially delactosed, demineralized product resulting from treatment of cheese whey with a divalent metal ion and adjustment of the pH to a value

above 6 at a temperature below 60°C. in accordance with the teachings of U.S. Patent No. 3,560,219 to Attebery followed by a concentration step to crystallize the lactose. This partially delactosed liquor can alternatively be passed through the bed of molecular sieve resin in accordance with U.S. Reissue Patent No. 27,806.

Whey protein containing products can also be prepared by adding undissolved sodium lauryl sulfate to liquid cheese whey, preferably acid cheese whey, at a temperature of from about 10°C. to about 25°C. and preferably 15-25°C. in an amount of from about 0.35% to about 0.40% based on the weight of the whey protein content at a pH of from about 6.0 to about 8.0, and preferably 6.5-7 and thereafter adjusting the pH of the whey containing said sodium lauryl sulfate to a value of from about 2.0 to about 5.0 and preferably from about 3.5 to about 4.0. After adjustment of the pH to from about 2 to about 5, a whey protein/sodium lauryl sulfate complex which has a protein content of from about 50% to about 60%, by weight will precipitate from solution. The sodium lauryl sulfate and protein are then separated from one another by a number of well known methods including: treatment with barium chloride, e.g., as described in J. Amer. Chem. Soc. 66: 692 (1944); dialysis, e.g., as described in J. Amer. Chem. Soc. 81:1400 (1959); treatment with acetone, e.g., as described in Ind. Eng. Chem. 36:372 (1944); or treatment with an anionic exchange resin, e.g., as described in J. Biological Chem. 246:4504 (1971).

The amount of whey protein containing product used is generally dependent on the amount of additives used. Generally, the whey protein containing product comprises at least about 85% of the blend, the remainder of the blend upon which the percentage is based being made up with

gelatin, gelatin and polyphosphate and/or a gum and the enzymatically hydrolyzed wheat protein including any starch or sugar additives to the gluten. The gelatin can be used in an amount ranging from about 1% to about 10% and preferably from about 1% to about 5% by weight. When using gelatin alone (no polyphosphate) it is more preferably used in an amount ranging from about 3% to about 5% by weight. When used in combination with the polyphosphate, results equivalent to those obtained using gelatin alone can be obtained using less gelatin. In some cases, the amount of gelatin used with the polyphosphate can be reduced by as much as 50% over the quantity of gelatin used alone while providing substantially equivalent results. When using the gelatin with the polyphosphate, the preferred amount of gelatin is from about 1% to about 3%, the preceding broad and intermediate ranges being applicable.

The polyphosphate used in the present invention is preferably sodium hexametaphosphate. Sodium hexametaphosphate has been found to be usable within the range of from about 5% to about 15% by weight, and preferably from about 6% to about 11%. In general, as the amount of polyphosphate increases, the amount of gelatin decreases. It is preferred that the additive total of gelatin and polyphosphate not exceed 15% and preferably not above 13%.

The gum is preferably used in an amount ranging from about 0.5% to an amount above which the final product shows adverse properties in the area of use. In general, the gum is not to exceed about 5% by weight based on the egg albumen replacer, the upper limit varying depending on the actual gum utilized. In some cases, more can be used and in some cases less. For example, it has been found that 5% of the preferred gum carrageenan (milk gel strength 90 to 110 grams break force required to fracture a 0.2% milk gel from fresh pasteurized homogenized whole milk using a 2.15 cm diameter plunger at 10°C.) while operable tends to show an adverse effect on the texture of a

cake. For example, yellow cake prepared with the egg albumen replacer of the present invention containing 5% carrageenan shows a slightly harder texture than the control. It is preferred that the amount of carrageenan utilized not exceed 3% by weight of the egg albumen replacer.

If desired, sodium aluminum sulfate can be added in an amount up to and including about 5%, and preferably from about 1% to about 2% by weight of the egg albumen replacer to further improve the stability of the foam.

Also, it has been found desirable to include from 0% to about 5% and preferably from about 1% to about 2.5% by weight of the egg albumen replacer of an acidifying agent in the form of anhydrous monocalcium phosphate. This agent contributes calcium ion to the system.

The products of the present invention can be prepared by dry blending the ingredients in the proportions desired. Liquid formulations can also be used but these require refrigeration. The products can be preblended for shipment to user or preblended in user's plant. Blending can also be accomplished in situ in the final use product.

The products of the present invention can be used as total or partial replacements for the egg albumen requirements of a recipe such as meringue, candy and cakes. If desired, the products of the present invention can be blended with egg albumen to form an extended egg albumen product. Liquid mixtures of albumen and the whey products of the invention can be prepared and frozen or dried as desired.

All the whey products of the invention are effective as a 100% replacement for egg albumen in hard meringue. A reduction in quality in the final product has been noted as the percentage of egg albumen replaced with the egg albumen replacer approaches 100%. Partial replacement of less than 75% and preferably of about 50% is preferred. As the percentage of egg albumen replaced

increases, the amount of hydrolyzed wheat protein decreases. At 100% replacement, the hydrolyzed wheat protein should be used in an amount of from 5 to 12.5%.

The percentages which are stated to be by weight based on the total weight of the egg albumen replacer are intended to be based on the combined weight of the whey protein concentrate and the additives unless otherwise stated.

The invention is more fully illustrated in the Examples which follow:

EXAMPLES 1 - 7

SOFT MERINGUE

A soft meringue was prepared by dissolving 13.2 grams dry albumen or albumen replacer in the percentages given in Table I in 93 milliliters of water, 4.8 grams of cream of tartar was mixed with the predissolved egg albumen or replacer in a Hobart C-100 mixer equipped with a 2.85 liter (3-quart) bowl and were whipped for one minute at speed No. 3. 136 grams of sugar was added gradually at a rate of about 15 milliliters (one tablespoon) per ten seconds while mixing. Mixing was continued for a total of ten minutes. The specific gravity of the foam was then measured. The stability of the foam was determined by the syneresis rate, i.e., the time needed to form one drop of liquid from 40 grams of foam inside of a 200 milliliter funnel fitted with a wire screen.

The whey protein containing product was prepared by ultrafiltration of cottage cheese whey and contained approximately 50% protein. The enzymatically hydrolyzed wheat protein was obtained under the trademark HYFOAMA 68. With the exception of Examples 2 and 5, the gelatin was dissolved alone in water at 40°C. for five

minutes. In Example 5, a physical blend of whey protein containing product, gelatin and SHMP were dissolved in water and heated to 40°C. for five minutes.

A 40 gram sample of each was baked in a 204°C. (400°F.) oven for seven minutes. The physical condition of the meringue was recorded. The flavor of Examples 3-7 was similar to the control.

The results are reported in Table I below.

TABLE I

| EXAMPLE | 1 | 2 | 3 | 4 | 5 | 6 | 7 |
|---|---|---|---|---|---|---|---|
| Egg albumen - % | 100 | 50 | 50 | 50 | 50 | 50 | 0 |
| Whey protein | -- | 44 | 41.25 | 38.5 | 38.5 | 33 | 77 |
| SHMP % N ave. 9-12 | -- | 5 | 4.69 | 4.38 | 4.38 | 3.75 | 8.75 |
| Gelatin % | -- | 1 | .938 | .875 | .875 | .75 | 1.75 |
| Enzyme Hydrolyzed Protein, % | -- | -- | 3.13 | 6.25 | 6.25 | 12.5 | 12.5 |
| Foam Specific Gravity | 0.212 | 0.250 | 0.214 | 0.215 | 0.218 | 0.203 | 0.205 |
| Foam Syneresis* | 3 | 3 | 4.7 | 5.8 | 4 | 6 | 9 |
| MERINGUE | | | | | | | |
| Volume (ml.) | 163 | 132 | 157 | 172 | 167 | 176 | 166 |
| Peaks ** | 1 | 2 | 2 | 1 | 1 | 2 | 1 |

* Time is hours to form the first drop.

** 1=stiff.
2=slightly rounded.

As can be seen from the data reported in Table I, the blend of whey protein containing product, gelatin and SHMP (Example 2) is not as effective as an aerating agent as egg albumen since the specific gravity was higher and the volume lower than the control. Those examples run in accordance with the present invention showed specific gravities and volumes substantially equivalent to the egg albumen control. Stability times in all cases were increased, in some cases 2 and 3 times that of the control.

## EXAMPLES 8 and 9

### DIVINITY CANDY

A divinity candy was prepared by blending 497 grams of sugar, 217 grams of corn syrup, 112 grams of water, and 1.5 grams of salt. This blend was heated to 129°C. without stirring.

In another vessel, 8.4 grams of dry egg albumen or albumen replacer, and anhydrous monocalcium phosphate in an amount listed in the table below were hydrated in 59.5 milliliters of water and dispersed at speed No. 10 in a Kitchen Aid mixer to form a foam. The specific gravity of the foam was checked and is reported below.

The hot syrup mixture was slowly added to the pre-whipped foam of the previous step while whipping at speed No. 8 for two minutes. The whipping was continued at speed No. 10 for an additional six minutes or until the mixture lost gloss.

2.2 grams of vanilla was then blended in and whipping continued for two minutes.

The mixture was spread on wax paper and allowed to cool.

The candy was tested for specific volume and hardness on a Precision Penetrometer using a cone loaded with a weight of 20 grams. The results of the tests on the candy preparation are reported below in Table II.

TABLE II

| EXAMPLE | 8 | 9 |
|---|---|---|
| Egg Albumen* % | 100% | 50% |
| Whey Protein % | -- | 38.5% |
| SHMP % - N. ave. 9-12 | -- | 4.375% |
| Gelatin | -- | .875% |
| Enzyme hydrolyzed wheat protein | -- | 6.25% |
| Foam Specific Gravity | 0.054 | 0.049 |
| CANDY | | |
| Specific Gravity | 0.696 | 0.740 |
| Specific Volume | 1.44 | 1.30 |
| Hardness - 1/10 mm | 9 | 14 |
| Grain | short | short |
| Flavor | good | good |

* Henningson Foods, P. 20.

The candy prepared using a 50% replacement of egg albumen exhibited similar foaming, hardness, grain and flavor to the control.

The invention is further defined in the claims which follow.

WHAT IS CLAIMED IS:

1. An improved whippable whey protein containing composition comprising at least 70% of a whey protein containing product having at least 20 parts soluble whey protein per 100 parts of dry solids in said whey protein containing product in combination with a member selected from the group consisting of from about 1% to about 10% gelatin; from about 1% to about 10% gelatin and from about 5% to about 15% of a water soluble polyphosphate, the additive total of gelatin and phosphate not to exceed about 15%; from about 0.5% to about 5% of a gum, and mixtures thereof; and from about 5% to-about 30% of an enzyme hydrolyzed wheat protein; said whey protein containing product being selected from the group consisting of:

a) a whey protein concentrate derived by the ultrafiltration of cottage cheese whey;

b) a water soluble low molecular weight whey protein product prepared by adjusting the pH of a solution containing a whey protein to a value of from about 11 to about 13, thereafter reducing the pH to a value of from about 4 to about 6 to yield a water solution of a water soluble whey product and insoluble whey solids, separating the water soluble whey final product and drying the same;

c) a whey protein product prepared by hydrolyzing the insoluble whey solids of step b) at a pH of between about 11 and about 13 for a period of time and at a temperature sufficient to hydrolyze the same; and

d) a precipitated whey protein prepared by combining liquid whey with an effective amount of sodium lauryl sulfate to form a sodium lauryl sulfate-

protein complex which precipitates from solution, followed by reducing the sodium lauryl sulfate content of the complex to less than 0.1% by weight based on the dry weight of the complex, all percentages are by weight based on the total weight of the whey protein containing composition.

2. The whippable composition as recited in Claim 1 wherein said member is gelatin and a water soluble polyphosphate, said polyphosphate preferably being sodium hexametaphosphate.

3. The whippable composition as recited in Claim 1 wherein said member is a gum selected from the group consisting of carrageenan, sodium alginate, potassium alginate, accacia, carboxymethylcellulose, guar, xanthan and mixtures thereof and preferably carrageenan.

4. The whippable composition as recited in Claim 1 wherein said solution containing whey protein in step b) is the first fraction obtained by passing partially delactosed cheese whey through a bed of molecular sieve resin.

5. The whippable composition as recited in Claim 1, step b) wherein the pH of said solution containing whey protein is adjusted to about 11.5 to about 11.9 for from 1 to 3 hours followed by reducing the pH to a value within the range of from about 4.2 to about 5.0.

7. The whippable composition as recited in Claim 1 wherein said liquid whey of step d) is the first fraction obtained by passing partially delactosed cheese whey through a bed of molecular sieve resin.

8. The whippable composition as recited in Claim 1 wherein said sodium lauryl sulfate content

in step d) is reduced by passing the complex through an ion exchange resin in the hydroxy form.

9. The whippable composition as recited in Claim 1 wherein said enzyme hydrolyzed wheat protein contains from 0% to about 10% sugar and 0% to about 20% starch.

European Patent Office

# EUROPEAN SEARCH REPORT

Application number

EP 79 10 2230

## DOCUMENTS CONSIDERED TO BE RELEVANT

| Category | Citation of document with indication, where appropriate, of relevant passages | Relevant to claim |
|---|---|---|
| D | US - A - 4 089 987 (P. CHANG)<br>* Claims 1-12; column 5, lines 54-30 *<br>-- | 1-8 |
| | FR - A - 2 118 757 (LENDERINK)<br>* Page 4, lines 19-27; examples *<br>-- | 1,9 |
| A | FR - A - 2 009 187 (LENDERINK) | |
| A | US - A - 2 965 493 (J. MANCUSO et al.)<br>---- | |

CLASSIFICATION OF THE APPLICATION (Int. Cl. 3)

A 23 J 3/00//
A 21 D 13/08
A 23 G 3/00

TECHNICAL FIELDS SEARCHED (Int.Cl. 3)

A 23 J 3/00
3/02
A 23 L 1/32
A 23 J 1/08
A 23 L 1/30
1/34
A 21 D 13/08
A 23 G 3/00

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 22-10-1979 | DESMEDT |